# EUROPEAN PATENT SPECIFICATION

(11) **EP 0 650 089 B1**
(45) Date of publication and mention of the grant of the patent: **21.06.2000**
(21) Application number: 94115125.0
(22) Date of filing: 26.09.1994
(51) Int. Cl.: G03C 5/17, C09K 11/86, C09B 23/04

(54) **High resolution radiographic recording element**
Hochauflösendes radiographisches Aufzeichnungselement
Elément d'enregistrement radiographique de haute résolution

(30) Priority: 20.10.1993 US 138307
(43) Date of publication of application: 26.04.1995
(73) Proprietor: AGFA-GEVAERT N.V., 2640 Mortsel (BE)
(72) Inventor: Beutel, Jacob, Hockessin, Delaware 19707 (US); Guy, Joseph T., Hendersonville, North Carolina 28739 (US); Fabricius, Dietrich Max, Hendersonville, North Carolina 28739 (US); Issler, Sandra Laurine, Wilmington, Delaware 19810 (US)
(74) Representative: Ramon, Charles Lucien

(56) References cited:
- EP-A- 0 028 521
- DE-A- 2 049 797
- US-A- 5 095 218
- US-A- 5 112 721
- RESEARCH DISCLOSURE, no. 218, June 1982, no. 21841, P. DE MAAYER et al. "Ultra- violet-radiation emitting X-ray intensifying screens" pages 223-225

## Description

### FIELD OF INVENTION

This invention is related to the field of medical radiography. More specifically this invention is related to an X-ray intensifying screen which emits primarily ultraviolet radiation and to a radiographic element comprising said X-ray intensifying screen.

### BACKGROUND OF THE INVENTION

Medical radiography has been exploited for many years as a means for visualizing and diagnosing internal, possibly pathological, structures in living organisms. A patient is typically exposed to X-rays which are selectively and partially absorbed by tissues and bones as they pass through the patient. The X-radiation which thus passes partially attenuated through the patient, carries information about the patients internal structure. Efforts aiming to capture and display this information with the highest degree of accuracy, minimal loss of information content and minimal patient exposure constitute the basis for a large part of the research effort in radiography.

Modern medical radiography systems typically utilize one or two phosphor intensifying screens which absorb X-rays and emit visible or ultraviolet light, thus translating the information initially carried by the X-ray beam to information carried by longer wavelength radiation. This longer wavelength image then impinges on a photographic element sensitive to the actinic light emitted by the intensifying screen or screens. This photographic element comprises one or two photosensitive elements coated on either side of a support. Upon absorbing the actinic light emitted by the intensifying screen or screens a latent image is formed in the photographic element, thus rendering the photographic element developable and allowing an image of the information originally carried by the X-ray beam to be recorded as a permanent image.

It is the aim of film/screen radiography to provide an image which records the information carried by the X-ray beam traversing the patients as faithfully as possible. The conversion of X-ray energy to actinic light in a screen depends on the probability of each one of a sequence of steps as follows:
(a) the probability that the screen will absorb an incoming X-ray quantum,
(b) the probability that a phosphor particle will emit a certain number of light photons, and finally
(c) the probability that a light photon, once emitted by a phosphor particle and then being subjected to light scattering and possible absorption within the screen, will emerge at the surface of the screen facing the photosensitive element.

The fact that the X-ray absorption and X-ray to light conversion processes are stochastic introduces random fluctuations in light intensity which are recorded as image noise and are commonly called "quantum noise"; light scattering also introduces noise, but, because of the increased chance that light photons emitted deep within the screen and at wide angles with respect to the screens surface will be absorbed, light scattering limits the size of the cone of light which emerges on the screens surface and whose apex lies at the point where an X-ray quantum has been absorbed within the screen. Thus, light scattering coupled with internal light absorption actually improves the screens' ability to faithfully reproduce the information carried by the X-ray beam, in that it improves the screens' ability to resolve fine details, i.e., by improving the screens' resolution as determined by its Modulation Transfer Function (MTF).

EP-A-0 028 521 discloses green-emitting X-ray intensifying screens having a phosphor layer which comprises a phosphor having at least one major green emission maximum in the wavelength range between 500 and 600 nm and at least one major blue emission maximum in the wavelength range between 300 and 500 nm and having at least 30 percent of its emission above 500 nm.

Recent advances in the art have demonstrated that a UV emitting screen provides superior resolution compared to screens which emit blue or green light. This is partially due to absorption of UV light by the film base and partly due to the decreased path length for absorption of UV light in the screen itself. This has resulted in the development of film/screen systems wherein the screen emits primarily UV light and the film is most sensitive to UV light emitted by the screen.

Phosphors have long been available which emit in the UV when excited with X-radiation. Some of these, particularly YTaO₄, emit primarily in the UV and are eminently suitable for use in an X-ray intensifying screen. Others, such as terbium activated lanthanum oxyhalide have excellent X-ray absorption properties and X-ray to light conversion efficiencies, yet they emit visible, blue and UV light. The visible emission is known to be detrimental to resolution and therefore these phosphors have limited utility for ultrahigh resolution imaging. There has been a persistent need in the art to provide an X-ray intensifying screen which has excellent X-ray to light conversion properties and emits virtually exclusively in the ultraviolet region of the electromagnetic spectrum.

Incorporation of visible absorbing dyes into a phosphor layer is known as exemplified in Research Disclosure, June 1982, #21841. There exist few dyes which have broad band absorption above 400 nm and very low absorption below 400 nm. There has been a persistent need in the art for dyes which can be incorporated into a radiographic intensifying screen to attenuate the visible emission above 400 nm selectively without detrimental loss of emission below 400 nm.

### SUMMARY OF THE INVENTION

It is an object of the present invention to provide a radiographic element with excellent resolution

It is another object of the present invention to provide an X-ray intensifying screen for a radiographic element which emits primarily in the ultra-violet.

A particular feature of the present invention is the ability to adapt phosphors which emit visible and ultra-violet light into a screen which emits primarily ultraviolet light by the inclusion of a dye which attenuates the visible emission.

The present invention provides
(1) an X-ray intensifying screen for a radiographic element comprising
   a support;
   at least one active layer coated on said support, wherein said active layer comprises
   a binder and a phosphor; and
   at least one layer comprises a dye defined as 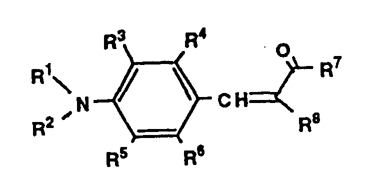
      wherein R¹ and R² are independently chosen from hydrogen, alkyl and aryl;
      R³, R⁴, R⁵ and R⁶ are independently chosen from H, alkyl, halogen, alkoxy, hydroxy;
      R⁷ represents alkyl, aryl, -OR⁹, -NR¹⁰R¹¹ wherein R⁹, R¹⁰ and R¹¹ independently represent hydrogen, alkyl and aryl;
      R⁸ is alkyl, aryl, -CN, -COR¹² wherein R¹² is alkyl or aryl, -COOR¹³ wherein R¹³ is alkyl or aryl;
      R⁷ and R⁸ can be taken together to form a five or six membered ring or a substituted five or six membered ring;
         wherein the active layer and the at least one layer comprising a dye are on the same side of the support, and
         wherein at least 70 % of the emission of said X-ray intensifying screen has a wavelength of less than 400 nm; and
(2) the X-ray intensifying screen recited in (1) above wherein at least 80 % of the emission of said X-ray intensifying screen has a wavelength of less than 400 nm.

In a particularly preferred embodiment the phosphor is chosen from:
(a) LnTaO₄
   Ln is yttrium, lutetium, gadolinium or combinations thereof;
(b) LnTaO₄:Re
   Ln is yttrium, lutetium, gadolinium or combinations thereof;
   Re is gadolinium, niobium, thulium, cerium or combinations thereof;
(c) Ln₂O₃:Re
   Ln is yttrium, gadolinium or combinations thereof;
   Re is a rare earth metal or combinations thereof;
(d) BaFX:Re
   X is a halide, or combination of halides;
   Re is at least one rare earth metal;
(e) ASO₄:Eu wherein A is barium, strontium or a combination thereof;
(f) CAWO₄;
(g) BaSi₂O₅:Pb;
(h) BaSO₄:Pb;
(i) Mg₄Ta₂₋₂ₓNb₂ₓO₉:M_{y}Na_{y'} wherein
   M is at least one of potassium, rubidium, cesium;
   x is 5x10⁻⁴ to 0.5;
   y is at least 2x10⁻³, and
   y+y' is less than 1.0;
(j) hafnium zirconium germanate unactivated or activated with titanium;
(k) Hf_{1-z}Zr_{z}M_{y}TiₓEₑOₐ wherein
   E represents at least one of germanium and silicon;
   e is in the range of from greater than 1x10⁻³ to 0.1;
   M represents at least one alkali metal;
   x is in the range of from 3x10⁻⁴ to 1.0;
   y is in the range of 1x10⁻⁴ to 1.0;
   z is in the range of from 4x10⁻⁴ to 0.3; and
   a is sufficient to balance the charge;
(l) hafnium zirconium oxide containing at least one alkali metal and activated with titanium, at least one rare earth element or a combination thereof;
(m) Li₂Hf_{1-x-y-z}Zr_{z}Sn_{y}TiₓL_{w}O₃
   where L is at least one rare earth;
   w+x+y collectively are 0 to 0.2; and
   z is up to 0.2.

In most preferred embodiments at least 80 % of the radiation emitted from the X-ray intensifying screen has a wavelength of less than 400 nm.

### BRIEF DESCRIPTION OF THE DRAWINGS

Fig. 1 is a schematic diagram of an apparatus for mammography imaging.
Fig. 2 is a cross-sectional view of an image recording element comprising a pair of X-ray intensifying screens in combination with a film element.

### DETAILED DESCRIPTION OF THE INVENTION

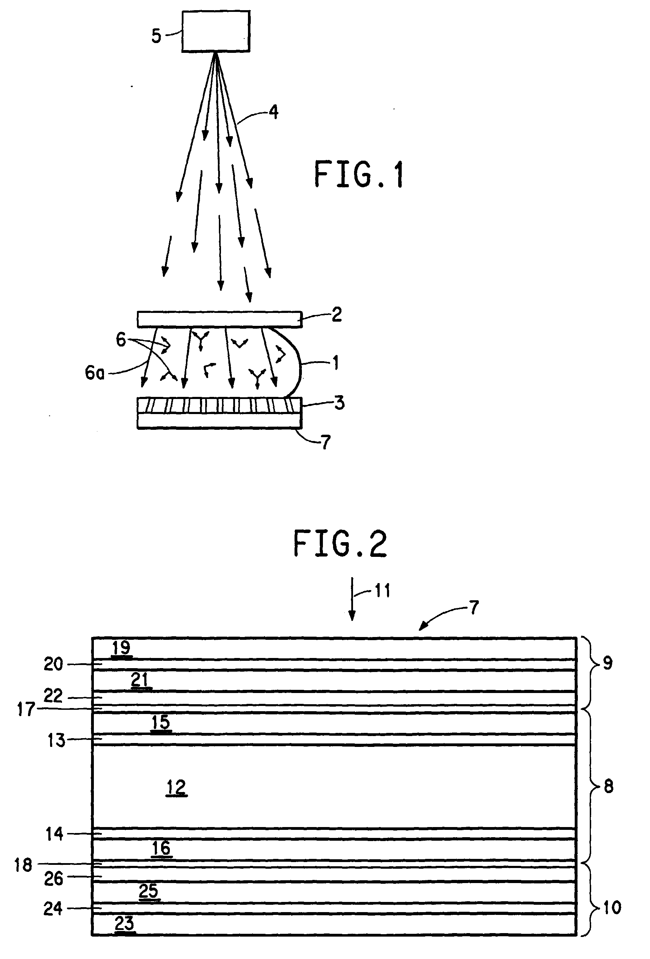

Fig. 1 shows a modern mammography exposure unit. The object to be examined, 1, is localized between a compression plate, 2, and an exposure grid, 3. X-radiation, 4, emanates from an x-ray source, 5, and transits through the substantially transparent compression plate, 2, prior to irradiating the object to be examined. As the x-radiation passes through the object to be examined two phenomena occur. The first phenomenon is scatter, as represented by 6. Scattered radiation is substantially attenuated by the grid, 3, while primary, non-scattered radiation passes through the grid largely unattenuated. The radiation is selectively absorbed within the object to be examined, thereby forming an imagewise x-ray intensity modulation which corresponds to structural variations within the object being examined. X-radiation whose fluence has been imagewise modulated and which passes through the grid, 3, is then recorded on the image recording device, 7. This invention provides improvements in the ability to accurately convert the imagewise modulated x-radiation intensity into an image. A conventional radiographic element is similar to a mammographic exposure unit with the exception of the absence of a compression plate and the possible addition of a table, or bed, between the object being examined and the grid.

Fig. 2 shows an expanded view of the radiographic element, 7. The film element, 8, is situated between the front intensifying screen, 9, and the back intensifying screen, 10. The exposure source is represented by the arrow, 11. The film element comprises a support, 12, with subbing layers, 13 and 14. Photosensitive layers 15, 16 are coated on the subbing layers. Optional, yet preferred, are anti-abrasion layers coated on both surfaces of the photographic element as represented by 17 and 18.

The front intensifying screen element, 9, comprises a support, 19, with an interlayer, 20, coated thereon. Below the interlayer, 20, is a phosphor layer, 21, comprising a phosphor and a binder. Optional, yet preferred, is a protective layer, 22. The back intensifying screen, 10, is analogous to the front intensifying screen, 9, with a support, 23, interlayer, 24, phosphor layer, 25, which comprises a phosphor and a binder and an optional, yet preferred protective layer, 26. In the present invention, the phosphor layer, protective layer, or both contain a dye suitable for attenuating the emissions above 400 nm. The front intensifying screen, 9, back intensifying screen, 10, and film element, 8, are typically contained in a reusable cassette, as known in the art, which is fashioned such that the film element can be easily replaced after each exposure.

The acutance dye is chosen such that its absorption of visible light (>400 nm) is high and its absorption of UV light (<400 nm) is low. Particularly suitable are acutance dyes defined by the general formula: 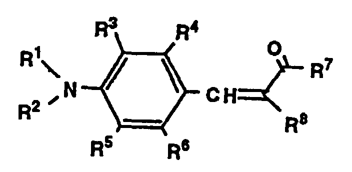
wherein R¹ and R² are independently chosen from hydrogen, alkyl, preferably of 1-10 carbons, more preferably of 1-5 carbons, aryl, preferably of 6-24 carbons more preferably of 6-10 carbons;
R³, R⁴, R⁵ and R⁶ are independently chosen from H, alkyl, preferably of 1-10 carbons, more preferably 1-5 carbons, halogen, alkoxy, hydroxy;
R⁷ represents alkyl, preferably of 1-10 carbons, more preferably of 1-5 carbons, aryl, preferably of 6-24 carbons, more preferably of 6-10 carbons, - OR⁹, -NR¹⁰R¹¹, wherein R⁹, R¹⁰ and R¹¹ independently represent hydrogen, alkyl, preferably of 1-10 carbons, more preferably of 1-5 carbons, aryl, preferably of 6-24 carbons, more preferably of 6-10 carbons;
R⁸ is alkyl, preferably of 1-10 carbons, more preferably of 1-5 carbons, aryl, preferably of 6-24 carbons, more preferably of 6-10 carbons, -CN, -COR¹², wherein R¹² is alkyl, preferably of 1-10 carbons, more preferably of 1-5 carbons, aryl, preferably of 6-24 carbons, more preferably of 6-10 carbons, - COOR¹³ wherein R¹³ is alkyl, preferably of 1-10 carbons, more preferably of 1-5 carbons, aryl, preferably of 6-24 carbons, more preferably of 6-24 carbons;
R⁷ and R⁸ can be taken together to form a five or six membered ring or a substituted five or six membered ring.

The five or six membered ring, or substituted five or six membered ring, may be broadly described provided the above mentioned properties are not compromised. The ring may be substituted of unsubstituted. Exemplary rings structures within the teachings of the invention are cycloalkyl, cycloalkenyl, indoles, piperidine, piperidyl, piperazinyl, pyrrolidine, pyrrolidinyl, pyrazolidine, pyrimidine, furan, thiophene, oxazine, barbituric acid, thiobarbituric acid, and rhodanine. Specifically suitable moieties are derived from the following nuclei which may be additionally substituted if so desired: 1,3-indanedione, pyrazolorie, 2,4,6,-trioxohexahydropyrimidine, 2-thio-4,6,dioxohexahydropyrimidine, 3,5-pyrazolidinedione, 5,7-dioxo-6,7-dihydro-5-thiazolo[3,2-a]pyrimidine, 2-thio-2,4-oxazolidinedione, 5,5-dialkyl-1,3-cylcohexanedione and 2-hydroxy-4H-pyrido[1,2-a]pyrimidin-4-one.

Particularly preferred accutance dyes are represented by

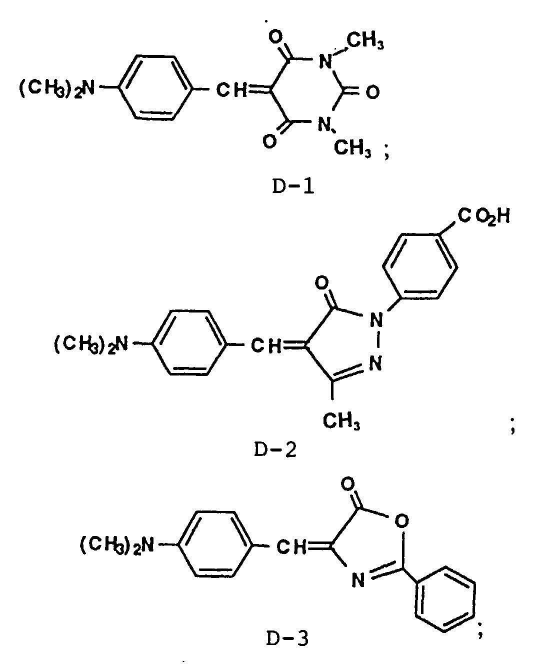

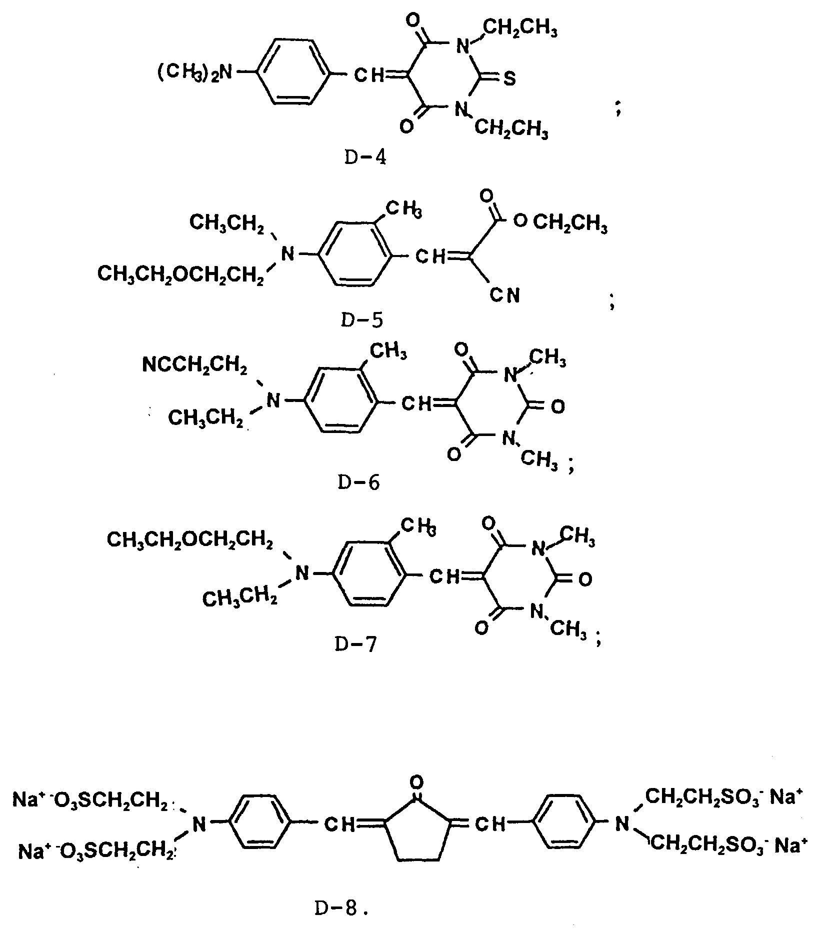

The terms aryl, alkyl, five membered ring and six membered ring refer to moieties which may be unsubstituted or substituted with halogen, alcohol, amines, thiols, alkyl, aryl, ethers, carboxyls, sulfonates, sulfonamides, amides and esters.
Particularly preferred phosphors are chosen from:
(a) LnTaO₄
   Ln is yttrium, lutetium, gadolinium or combinations thereof;
(b) LnTaO₄:Re
   Ln is lutetium, gadolinium or combinations thereof;
   Re is gadolinium, niobium, thulium, cerium or combinations thereof;
(c) Ln₂O₃:Re
   Ln is yttrium, gadolinium or combinations thereof;
   Re is thulium, terbium, gadolinium or combinations thereof;
(d) BaFX:Re
   X is chloride or bromide;
   Re is at least one rare earth metal, preferably europium;
(e) BaSrSO₄:Eu; and
(f) CAWO₄.

It is known in the art that the rare earth elements in the phosphor compositions listed are activators. An activator is specified in the chemical formula of a phosphor as :X, for activator X. Activators are typically added in an amount of up to 20% by weight and preferably 10% by weight.

Conventionally, an intensifying screen comprises a support, an intensifying phosphor layer, and a topcoat or protective layer thereon. A reflective layer, such as a whitener (e.g. TiO₂ dispersed in a suitable binder) may also be added into the screen structure. Commonly, this reflective layer is interposed between the phosphor layer and the support, or, alternatively, the whitener may be dispersed directly in the support. In operation, the reflective layer generally increases the light output of the intensifying screen. The protective layer is important to protect the phosphor layer against mechanical damage. The protective layer should also be UV transparent. Those protective layers that are known to strongly absorb UV light (e.g. polyethylene terephthalate films) are not particularly useful within this invention. In operation, the intensifying screen absorbs X-rays that impinge thereon and emits light having a wavelength that is actinic with respect to the photographic silver halide X-ray film associated therewith. The screens of this invention emit at least 70 % of their light below 400 nm. Most preferred is a screen which emits at least 80 % of its light below 400 nm.

Phosphors are generally manufactured by mixing the various oxides and firing in a suitable flux at elevated temperatures.

After firing, pulverizing and washing, the phosphor is mixed with a suitable binder in the presence of a suitable solvent and coated on a support. All of these steps are well-known in the prior art. A protective topcoat may also be applied over this phosphor coating, in fact it is preferred. For example, the phosphor may be coated to a coating weight of ca. 15 to 110 mg of phosphor per cm². A topcoat of styrene/acrylonitrile copolymer is coated thereon and dried. In a particularly preferred embodiment, an X-ray intensifying screen is made by dispersing LaOBr:Tm phosphor made as described above, in a mixture of acrylic resins using a solvent. This mixture is then coated on a polyethylene terephthalate support containing a small amount of anatase TiO₂ whitener dispersed therein.

Calcium tungstate phosphors are taught by Wynd, et.al., U. S. Pat. No. 2,303,942. Niobium-activated and rare earth-activated yttrium, lutetium, and gadolinium tantalates are taught by Brixner, U.S. Pat. No. 4,225,653. Rare earth-activated gadolinium and yttrium middle chalcogen phosphors are taught by Royce, et.al., U.S. Pat. No. 3,418,246. Rare earth-activated lanthanum and lutetium middle chalcogen phosphors are illustrated by Yocum, U.S. Pat. No. 3,418,247. Terbium-activated lanthanum, gadolinium and lutetium oxysulfide phosphors are illustrated by Buchanan, et.al. U.S. Pat. No. 3,725,704. Cerium-activated lanthanum oxychloride phosphors are taught by Swindells U.S. Pat. No. 2,729,604. Terbium-activated and optionally cerium-activated lanthanum and gadolinium oxyhalide phosphors are disclosed by Rabatin U.S. Pat. No. 3,617,743 and Ferri, et.al., U.S. Pat. No. 3,974,389. Rare earth-activated rare earth oxyhalide phosphors are taught by Rabatin U.S. Pat. Nos. 3,591,516 and 3,607,770. Terbium-activated and ytterbium-activated rare earth oxyhalide phosphors are taught by Rabatin, U.S. Pat. No. 3,666,676. Thulium-activated lanthanum oxychloride or oxybromide phosphors are taught by Rabatin U.S. Pat. No. 3,795,814. A (Y,Gd)2O2S:Tb phosphor wherein the ratio of yttrium to gadolinium is between 93:7 and 97:3 is taught by Yale, U.S. Pat. No. 4,405,691. Non-rare earth coactivators, such bismuth and ytterbium-activated lanthanum oxychloride phosphors are taught by Luckey, et.al., U.S. Pat. No. 4,311,487. Titanium activated zirconium and hafnium oxide phosphors are taught by Bryan, et.al., U.S. Pat. No. 5,095,218. Europium activated barium flourohalide phosphor wherein a portion of barium is replaced with an alkali metal and a trivalent metal are taught in Umemoto, et.al., U.S. Pat. No. 5,089,170. Titanium activated and unactivated hafnium zirconium germanate phosphors are taught in Lambert, et.al., U.S. Pat. No. 5,112,700. Magnesium tantalum niobium oxide phosphors are taught in Sieber, et.al., U.S. Pat. No. 5,132,192. Hafnium zirconium phosphors are taught by Bryan, et.al., U.S. Pat. Nos. 4,996,003; 4,988,880 and 4,988,881. The mixing of phosphors as well as the coating of phosphors in separate layers of the same screen are recognized. Specific examples include mixtures of calcium tungstate and yttrium tantalate as illustrated by Patten, U.S. Pat. No. 4,387,141.

The phosphors may be prepared as is well-known in the art and then mixed with a suitable binder before coating on a suitable support. Once prepared in this manner, this element is conventionally known as an X-ray intensifying screen and is eminently suitable for radiological examinations.

Medical X-ray film processing is well documented in the art as exemplified in Wuelfing, U. S. Patent 4,741,991. A medical X-ray film to be processed is developed to convert latent image centers within the silver halide grain into elemental silver. Unreacted silver halide is then removed by dissolving in a suitable fixer and the film is washed and dried to provide a final image.

In the radiological process, it is conventional to employ a photosensitive silver halide film element with the above described X-ray intensifying screens. In the practice of this invention, the silver halide element will be comprised of silver halide grains. These element are also well-known in the prior art and the preparation of grains is also known and taught therein. The grains are generally suspended in an emulsion using a binder such as gelatin, and are sensitized with gold and sulfur, for example. Other adjuvants such as antifoggants, wetting and coating aides, sensitizing dyes, hardeners etc. may also be present if necessary. The emulsion may be double-side coated on the support and a thin, hardened gelatin overcoat is usually applied over each of the emulsion layers to provide protection thereto. Since the emulsions useful within the ambit of this invention are generally UV sensitive in and of themselves, spectral sensitizing dyes may not be required. However, if required, a small amount of a sensitizing dye might advantageously be added as exemplified in U.S. Pat. Nos. 5,108,887 and 5,169,748. Additionally, it is also conventional to add a sensitizing dye to tabular emulsions in order to increase their ability to respond to light.

The silver halide emulsion may employ any of the conventional halides, but preferred are pure silver bromide or silver bromide with small amounts of iodide incorporated therein (e.g. 98% Br and 2% I by weight for example). Any grain morphology is suitable for demonstration of these teachings, including, but not limited to, grains which are formed by splash techniques and those formed by spray techniques (i.e. single and double jet procedures). Tabular grains are most preferred.

Tabular grain silver halide products are well-known in the prior art with exemplary methods of manufacture described by Maskasky in U.S. 4,400,463; Wey, U.S. 4,399,205; Dickerson, U.S. 4,414,304; Wilgus et al., U.S. 4,434,226; Kofron et al., U.S. 4,439,520; Nottorf, U.S. 4,722,886; and Ellis, U.S. 4,801,522.

After the grains are made, it is usually preferable to disperse the grains with a binder (e.g. gelatin or other well-known binders such as polyvinyl alcohol, phthalated gelatins, etc.). In place of gelatin other natural or synthetic water-permeable organic colloid binding agents can be used as a total or partial replacement thereof. Such agents include water permeable or water-soluble polyvinyl alcohol and its derivatives, e.g., partially hydrolyzed polyvinyl acetates, polyvinyl ethers, and acetals containing a large number of extralinear -CH₂CHOH- groups; hydrolyzed interpolymers of vinyl acetate and unsaturated addition polymerizable compounds such as maleic anhydride, ethyl esters of acrylic and methacrylic acid, and styrene. Suitable colloids of the last mentioned type are disclosed in U.S. Patents 2,276,322, 2,276,323 and 2,347,811. The useful polyvinyl acetals include polyvinyl acetaldehyde acetal, polyvinyl butyraldehyde acetal and polyvinyl sodium o-sulfobenzaldehyde acetal. Other useful colloid binding agents include the poly-N-vinyllactams of Bolton U.S. Patent 2,495,918, the hydrophilic copolymers of N-acrylamido alkyl betaines described in Shacklett U.S. Patent 2,833,650 and hydrophilic cellulose ethers and esters. Phthalated gelatins may also be used, as well as binder adjuvants useful for increasing covering power such as dextran or the modified, hydrolyzed gelatins of Rakoczy, U.S. 3,778,278.

It is most preferable to chemically sensitize the grains with salts that are well known in the art. The most common sensitizers are salts of gold or sulfur. Sulfur sensitizers include those which contain labile sulfur, e.g. allyl isothiocyanate, allyl diethyl thiourea, phenyl isothiocyanate and sodium thiosulfate. Other non-optical sensitizers such as amines as taught by Staud et al., U.S. Patent 1,925,508 and Chambers et al., U.S. 3,026,203, and metal salts as taught by Baldsiefen, U.S. Patent 2,540,086 may also be used.

The emulsions can contain antifoggants, e.g. 6-nitrobenzimidazole, benzotriazole, or triazaindenes, as well as the usual hardeners, e.g., chrome alum, formaldehyde, dimethylol urea, mucochloric acid, and others are recited in Research Disclosure, No. 308, December 1989, Item 30819. Other emulsion adjuvants that may be added comprise matting agents, plasticizers, toners, optical brightening agents, surfactants, image color modifiers, non-halation dyes, and covering power adjuvants.

The film support for the emulsion layers used in the process may be any suitable transparent plastic. For example, the cellulosic supports, e.g. cellulose acetate, cellulose triacetate and cellulose mixed esters may be used. Polymerized vinyl compounds, e.g., copolymerized vinyl acetate and vinyl chloride, polystyrene, and polymerized acrylates may also be mentioned. Preferred films include those formed from the polyesterification product of a dicarboxylic acid and a dihydric alcohol made according to the teachings of Alles, U.S. Patent 2,779,684 and the patents referred to in the specification thereof. Other suitable supports are the polyethylene terephthalate/isophthalates of British Patent 766,290 and Canadian Patent 562,672 and those obtainable by condensing terephthalic acid and dimethyl terephthalate with propylene glycol, diethylene glycol, tetramethylene glycol or cyclohexane 1,4-dimethanol (hexahydro-p-xylene alcohol). The films of Bauer et al., U.S. Patent 3,052,543 may also be used. Polyester films are particularly suitable because of their dimensional stability.

When polyethylene terephthalate is manufactured for use as a photographic support, the polymer is cast as a film, the mixed polymer subbing composition of Rawlins, U.S. Patent 3,567,452 is applied and the structure is then biaxially stretched, followed by application of a gelatin subbing layer. Alternatively, antistatic layers can be incorporated as illustrated, for example, by Miller, U.S. Patents 4,916,011 and 4,701,403, Cho, U.S. Patents 4,891,308 and 4,585,730 and Schadt, U.S. Patent 4,225,665. Upon completion of stretching and application of subbing composition, it is necessary to remove strain and tension in the base by a heat treatment comparable to the annealing of glass.

The emulsions may be coated on the supports mentioned above as a single layer or multi-layer element. For medical X-ray applications, for example, layers may be coated on both sides of the support which conventionally contains a dye to impart a blue tint thereto. Contiguous to the emulsion layers it is conventional, and preferable, to apply a thin stratum of hardened gelatin supra to said emulsion to provide protection thereto.

The MTF(*f*) is a calculated function of spatial frequency, f as known in the art. The determination of MTF(*f*) is well known and described in Dainty and Shaw, *Imaging Science*, Academic Press, London-New York-San Francisco 1974, p.234-58. The maximum MTF is unity, with decreasing MTF depicting a decreasing ability to reproduce signals of increasing spatial frequency. The major contributor to a decrease in MTF for a medical X-ray screen/film system is the screen; the contribution from the film involved is typically minor. Film contrast or γ(E), where E is the exposure, represents the variation in film output optical density in response to an exposure difference as determined by the derivative of the films' response (H&D) curve. Exposure latitude depends primarily on the breadth of the γ curve and particularly on the curvature near the maximum of the γ curve.

### SYNTHESIS OF ACUTANCE DYES

The following synthetic procedures are presented as examples. Standard organic preparative techniques can be used and other dyes of the present invention can be synthesized in a manner analogous to the procedures detailed below.

### Synthesis of D-1 (5-(4-Dimethylaminobenzylidenyl)-1,3-dimethyl-2,4,6-trioxopyrimidine)

4-Dimethylaminobenzaldehyde (4.47 g, 0.03 mol), 1,3-dimethylbarbituric acid (4.68 g, 0.03 mol), anhydrous sodium acetate (2.46 g, 0.03 mol), and 100 ml acetic acid were heated together to reflux for 45 minutes. After cooling, the product was collected by filtration, washed with acetic acid, and reslurried with isopropanol to yield 7.30 9, mp 237 °C , λmax = 464 (ε = 64,000).

### Synthesis of D-2 (4-(p-Dimethylaminobenzylidene)-1-(4-carboxyphenyl-3-methyl-2-pyrazolin-5-one])

4-(3-Methyl-5-oxo-2-pyrazolin-1-yl)benzoic acid (6.54 g, 0.03 mol), 4-dimethylaminobenzaldehyde (4.44, 0.03 mol), anhydrous sodium acetate (7.5 g, 0.09 mol) and 100 ml acetic acid were mixed together and heated to reflux for 50 minutes. After cooling to room temperature, the product was collected by filtration, washed with acetic acid, and reslurried in 95% ethanol to yield 10.3 g orange crystals, mp 322 °C , λmax = 470 (ε = 41,000).

### Synthesis of D-3

Hippuric acid (5.37 g, 0.03 mol), 4-dimethylaminobenzaldehyde (4.47 g, 0.03 mol), anhydrous sodium acetate (2.46 g, 0.03 mol), and 16.5 ml acetic anhydride were heated to reflux for 2 hours. The reaction mixture was cooled, the product collected and reslurried with ethyl acetate. After filtering and drying, the yield was 6.96 g. The crude product was recrystallized from 600 ml hot acetone to give bright red needles, 2.45 g, mp 214 °C , λₘₐₓ(methanol) = 465 nm (54,000).

### Synthesis of D-4

4-Dimethylaminobenzaldehyde (4.47 g, 0.03 mol), 1,3-diethylthiobarbituric acid (6.0 g, 0.03 mol), anhydrous sodium acetate (2.46 g, 0.03 mol), and 100 ml acetic acid were heated together to reflux for 10 minutes. After cooling, the product was collected by filtration, washed with acetic acid, and reslurried with isopropanol to yield 9.16 g, mp 209 °C , λₘₐₓ(methanol) = 495 nm (69,000).

### Synthesis of D-5

4-(N-Ethyl-N-β-ethoxyethylamino)-2-methylbenzaldehyde (4.7 g, 0.02 mol), and ethyl cyanoacetate (2.26 g, 0.02 mol) were mixed together in 25 ml denatured ethanol. Five drops of triethylamine were added and the mixture refluxed for approximately 30 h. The mixture was cooled, filtered, and the solvent removed to yield 5.81 g liquid, λmax(methanol) = 435 nm (23,000).

### Synthesis of D-6

Red B Aldehyde Pulp (Hilton-Davis, 6.48g, 0.03 mol), 1,3-dimethylbarbituric acid (4.68g, 0.03 mol), anhydrous sodium acetate (2.46 g, 0.03 mol), and 100 ml acetic acid were heated together to reflux for 2 h. After cooling, the mixture was filtered and then poured into ice-water. The solid was collected and slurried with ethyl acetate. Filtering and drying yielded 9.34 g, mp 117 °C , λmax(methanol) = 471 nm (42,000).

### Synthesis of D-7

4-(N-Ethyl-N-β-ethoxyethylamino)-2-methylbenzaldehyde (7.05 g, 0.03 mol), 1,3-dimethylbarbituric acid (5.25g, 0.034 mol), anhydrous sodium acetate (2.46 g, 0.03 mol), and 100 ml acetic acid were heated together to reflux for 3.5 h. After cooling, the mixture was poured into ice-water to yield an oil. The oil was extracted with ethyl acetate and ethyl acetate portions dried over sodium sulfate. Rotoevaporation yielded 11.31 g of an oil, λmax = 482 nm (44,000).

### Synthesis of D-8

4-(N,N-Bis-(2-sulfoethyl)amino)benzaldehyde, disodium salt (3.82, 0.01 mol) and cyclopentanone (0.42 g, 0.005 mol) were mixed in 25 ml 95% ethanol. Four ml of 9% aqueous sodium hydroxide was added and the mixture heated to reflux for 7 hours. On cooling, the reaction mixture set-up. The product was filtered, slurried overnight in 95% ethanol, filtered, and dried to yield 3.50 g, mp >350 °C , λmax(methanol) = 478 nm (54,000), λmax(water) = 492 nm (45,000).

### 4-(N,N-(2-Sulfoethyl)amino)benzaldehyde, disodium salt

Sodium sulfite (11.12g, 0.088 mol) was dissolved in 40 ml water. 4-(N,N-Bis(2-chloroethyl)aminobenzaldehyde(9.88 g, 0.04 mol) was added. The mixture was heated to reflux for 11.5 h until the mixture cleared. The solution was filtered hot, allowed to cool, and then rotary evaporated to dryness. The residue was dissolved in hot water and poured into 400 ml 95% ethanol. After stirring 3 hours, the precipitant was collected and slurried in acetone overnight. After filtering and drying, the yield was 14.60 g, mp >350 °C , IR: 1652 cm⁻¹ (CHO), 1175 cm⁻¹ (SO₃⁻).

### EXPERIMENTAL RESULTS

An X-ray intensifying screen was prepared with LaOBr:Tm phosphor obtained from General Electric. The phosphor was mixed with Carboset® (B. F. Goodrich) binder and an appropriate amount of acutance dye and coated on a support at a phosphor coating weight of 70 mg/cm². Cassettes containing the appropriate screen and an ultra-high resolution film (Ultravision^{tm} UV-G available from Du Pont de Nemours, Wilmington, DE) were given an exposure through a conventional resolution test target, which contains a knife edge, at 70 KvP with a tungsten anode X-ray source. After exposure, the films were processed in a conventional medical X-ray processor using a medical X-ray developer and fixer formulation in accordance with the teachings provided in Wuelfing, U. S. Patent 4,741,991. The resulting film was then washed, dried and analyzed. The results are tabulated in Table 1.

**TABLE 1**

| Dye | Conc. (ppm) | MTF | Rel. Spd. | |
|---|---|---|---|---|
| - | 0 | .213 | 1 | Control |
| D-1 | 500 | .298 | .78 | Inventive |
| D-1 | 1000 | .312 | .68 | Inventive |
| D-1 | 2000 | .339 | .58 | Inventive |
| D-2 | 500 | .310 | .72 | Inventive |
| D-2 | 1000 | .334 | .65 | Inventive |
| D-2 | 2000 | .366 | .53 | Inventive |
| Wherein ppm is parts of acutance dye, by weight, per million parts of phosphor, by weight, and MTF is Modulation Transfer Function at 2 cycles per millimeter. | | | | |

As indicated, the reduction of visible emission increases the resolution of the screen, as measured by the Modulation Transfer Function. The increase is approximately 40-72% for the cases cited. In all cases the speed loss was less than 50% which is still suitable for ultra-high resolution imaging.

## Claims

1. An X-ray intensifying screen for a radiographic element comprising
a support;
at least one active layer coated on said support, wherein said active layer comprises
a binder and a phosphor; and
at least one layer comprises a dye defined as 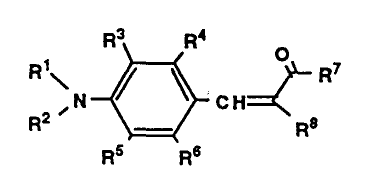
wherein R¹ and R² are independently chosen from hydrogen, alkyl and aryl;
R³, R⁴, R⁵ and R⁶ are independently chosen from H, alkyl, halogen, alkoxy, hydroxy;
R⁷ represents alkyl, aryl, -OR⁹, -NR¹⁰R¹¹ wherein R⁹, R¹⁰ and R¹¹ independently represent hydrogen, alkyl and aryl;
R⁸ is alkyl, aryl, -CN, -COR¹² wherein R¹² is alkyl or aryl, -COOR¹³ wherein R¹³ is alkyl or aryl;
R⁷ and R⁸ can be taken together to form a five or six membered ring or a substituted five or six membered ring;
wherein the active layer and the at least one layer comprising a dye are on the same side of the support, and
and
wherein at least 70 % of the emission of said X-ray intensifying screen has a wavelength of less than 400 nm.

2. The X-ray intensifying screen recited in claim 1 wherein at least one said phosphor is chosen from:
(a) LnTaO₄
Ln is yttrium, lutetium, gadolinium or combinations thereof;
(b) LnTaO₄:Re
Ln is yttrium, lutetium, gadolinium or combinations thereof;
Re is gadolinium, niobium, thulium, cerium or combinations thereof;
(c) Ln₂O₃:Re
Ln is yttrium, gadolinium or combinations thereof;
Re is a rare earth metal or combinations thereof;
(d) BaFX:Re
X is a halide, or combination of halides;
Re is at least one rare earth metal;
(e) ASO₄:Eu wherein A is barium, strontium or a combination thereof;
(f) CAWO₄;
(g) BaSi₂O₅:Pb;
(h) BaSO₄:Pb;
(i) Mg₄Ta₂₋₂ₓNb₂ₓO₉:M_{y}Na_{y'} wherein
M is at least one of potassium, rubidium, cesium;
x is 5x10⁻⁴ to 0.5;
y is at least 2x10⁻³, and
y+y' is less than 1.0;
(j) hafnium zirconium germanate unactivated or activated with titanium;
(k) Hf_{1-z}Zr_{z}M_{y}TiₓEₑOₐ wherein
E represents at least one of germanium and silicon;
e is in the range of from greater than 1x10⁻³ to 0.1;
M represents at least one alkali metal;
x is in the range of from 3x10⁻⁴ to 1.0;
y is in the range of 1x10⁻⁴ to 1.0;
z is in the range of from 4x10⁻⁴ to 0.3; and
a is sufficient to balance the charge;
(l) hafnium zirconium oxide containing at least one alkali metal and activated with titanium, at least one rare earth element or a combination thereof;
(m) Li₂Hf_{1-x-y-z}Zr_{z}Sn_{y}TiₓL_{w}O₃
where L is at least one rare earth;
w+x+y collectively are 0 to 0.2; and
z is up to 0.2.

3. The X-ray intensifying screen recited in claim 2 wherein at least one said phosphor is chosen from:
(a) LnTaO₄
Ln is yttrium, lutetium, gadolinium or combinations thereof;
(b) LnTaO₄:Re
Ln is lutetium, gadolinium or combinations thereof;
Re is gadolinium, niobium, thulium, cerium or combinations thereof;
(c) Ln₂O₃:Re
Ln is yttrium, gadolinium or combinations thereof;
Re is thulium, terbium, gadolinium or combinations thereof;
(d) BaFX:Re
X is chloride or bromide;
Re is at least one rare earth metal, preferably europium;
(e) BaSrSO₄:Eu; and
(f) CAWO₄.

4. The X-ray intensifying screen recited in claim 1 wherein said dye is 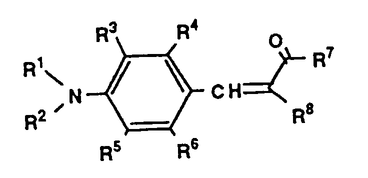
wherein R¹ and R² are independently chosen from hydrogen, alkyl of 1-10 carbons, aryl of 6-24 carbons;
R³, R⁴, R⁵ and R⁶ are independently chosen from H, alkyl of 1-10 carbons, halogen, alkoxy, hydroxy;
R⁷ represents alkyl of 1-10 carbons, aryl of 6-24 carbons, -OR⁹, -NR¹⁰R¹¹ wherein R⁹, R¹⁰ and R¹¹ independently represent hydrogen, alkyl of 1-10 carbons, aryl of 6-24 carbons;
R⁸ is alkyl of 1-10 carbons, aryl of 6-24 carbons, -CN, -COR¹² wherein R¹² is alkyl of 1-10 carbons or aryl of 6-24 carbons, -COOR¹³ wherein R¹³ is alkyl of 1-10 carbons or aryl of 6-24 carbons;
R⁷ and R⁸ can be taken together to form a five or six membered ring or a substituted five or six membered ring.

5. The X-ray intensifying screen recited in claim 4 wherein said dye is chosen from:

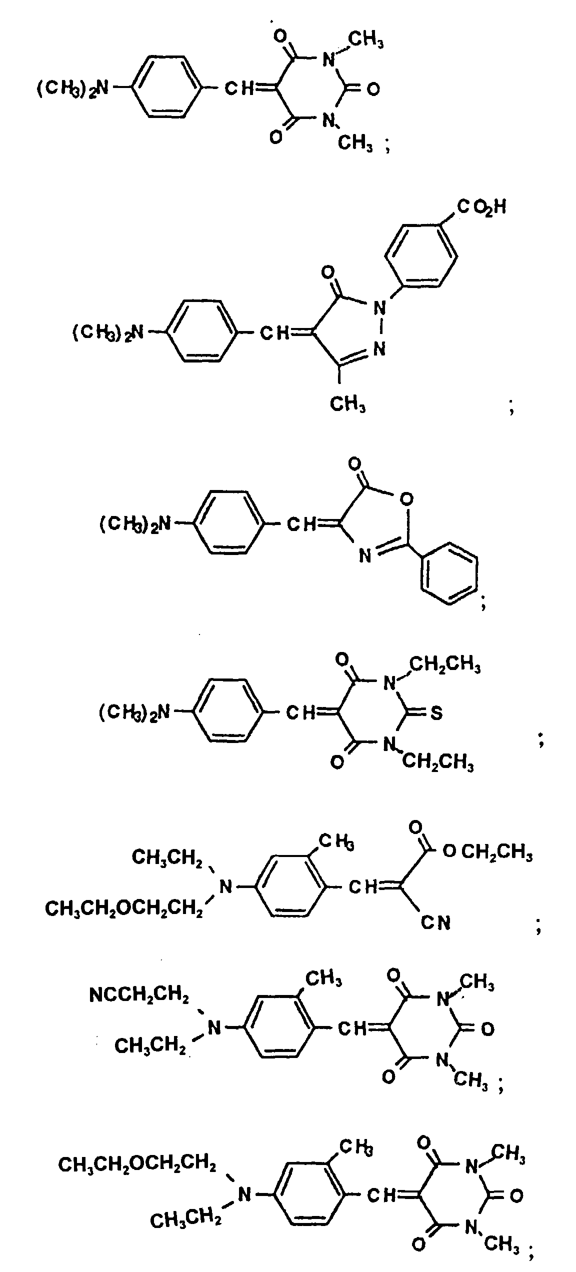

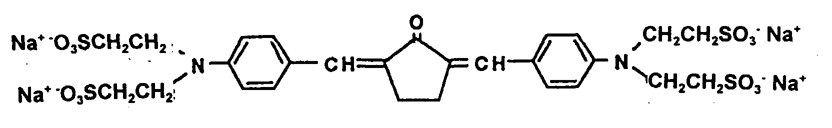

6. The X-ray intensifying screen recited in claim 1 wherein at least 80 % of the emission of said X-ray intensifying screen has a wavelength of less than 400 nm.

7. A radiographic element comprising an X-ray intensifying screen as recited in claim 1 and a film element, wherein the active layer of the intensifying screen faces the film element.

8. The X-ray intensifying screen recited in claim 1 comprising
a support with at least one layer coated thereon;
at least one said layer comprises at least one phosphor dispersed in a binder wherein said phosphor is as defined in claim 3; and
at least one said layer comprises a dye as defined in claim 1.

9. A radiographic recording element comprising at least one X-ray intensifying screen as recited in claim 8 and a film element, wherein the active layer of the intensifying screen faces the film element.

10. The radiographic recording element recited in claim 9 comprising two said X-ray intensifying screens.

## Patentansprüche

1. Ein Röntgenverstärkungsschirm für ein Röntgenelement, der folgende Bestandteile enthält :
- einen Träger,
- wenigstens eine aktive, auf den Träger vergossene Schicht, die ein Bindemittel und einen Leuchtstoff enthält, und
- wenigstens eine Schicht mit einem Farbstoff der folgenden Formel : 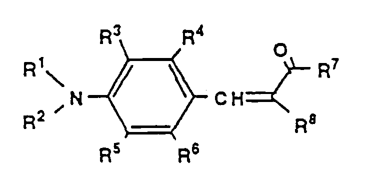 in der bedeuten :
R¹ und R² unabhängig voneinander ein Wasserstoffatom, eine Alkylgruppe oder eine Arylgruppe,
R³, R⁴, R⁵ und R⁶ unabhängig voneinander ein Wasserstoffatom, eine Alkylgruppe, ein Halogenatom, eine Alkoxygruppe oder eine Hydroxylgruppe,
R⁷ eine Alkylgruppe, eine Arylgruppe, eine -OR⁹-Gruppe oder eine -NR¹⁰R¹¹-Gruppe, wobei R⁹, R¹⁰ und R¹¹ unabhängig voneinander ein Wasserstoffatom, eine Alkylgruppe oder eine Arylgruppe bedeuten,
R⁸ eine Alkylgruppe, eine Arylgruppe, eine -CN-Gruppe, eine -COR¹²-Gruppe, wobei R¹² eine Alkylgruppe oder eine Arylgruppe ist, oder eine -COOR¹³-Gruppe, wobei R¹³ eine Alkylgruppe oder eine Arylgruppe ist, oder in der
R⁷ und R⁸ zusammen einen gegebenenfalls substituierten fünf- oder sechsgliedrigen Ring bilden können,
wobei die aktive Schicht und wenigstens eine einen Farbstoff enthaltende Schicht auf dieselbe Trägerseite aufgetragen sind und wobei die Wellenlänge von wenigstens 70% der Emission des Röntgenverstärkungsschirms unter 400 nm liegt.

2. Röntgenverstärkungsschirm nach Anspruch 1, dadurch gekennzeichnet, daß der (die) Leuchtstoff(e) aus
(a) LnTaO₄,
wobei Ln Yttrium, Lutetium, Gadolinium oder eine Kombination derselben ist,
(b) LnTaO₄:Re,
wobei Ln Yttrium, Lutetium, Gadolinium oder eine Kombination derselben ist und Re Gadolinium, Niobium, Thulium, Cer oder eine Kombination derselben ist,
(c) Ln₂O₃:Re,
wobei Ln Yttrium, Gadolinium oder eine Kombination derselben ist und Re ein Seltenerdmetall oder eine Kombination von Seltenerdmetallen ist,
(d) BaFX:Re,
wobei X ein Halogenid oder eine Kombination von Halogeniden ist und Re wenigstens ein Seltenerdmetall bedeutet,
(e) ASO₄:Eu,
wobei A Barium, Strontium oder eine Kombination derselben ist,
(f) CAWO₄,
(g) BaSi₂O₅:Pb,
(h) BaSO₄:Pb,
(i) Mg₄Ta₂₋₂ₓNb₂ₓO₉:M_{y}Na_{y'},
wobei M Kalium, Rubidium oder Cäsium oder eine Kombination derselben bedeutet,
x zwischen 5x10⁻⁴ und 0,5 liegt,
y wenigstens 2x10⁻³ beträgt und
y+y' weniger als 1,0 bedeutet,
(j) wahlweise mit Titan aktiviertem Hafniumzirconiumgermanat,
(k) Hf_{1-z}Zr_{z}M_{y}TiₓEₑOₐ,
wobei E Germanium oder Silicium oder die Kombination beider bedeutet,
e zwischen 1x10⁻³ und 0,1 liegt,
M wenigstens ein Alkalimetall bedeutet,
x zwischen 3x10⁻⁴ und 1,0 liegt,
y zwischen 1x10⁻⁴ und 1,0 liegt,
z zwischen 4x10⁻⁴ und 0,3 liegt und
a als Zahl hinreicht, um die Ladung auszugleichen,
(l) Hafniumzirconiumoxid, das wenigstens ein Alkalimetall enthält und mit Titan, wenigstens einem Seltenerdmetall oder einer Kombination derselben aktiviert ist, und
(m) Li₂Hf_{1-x-y-z}Zr_{z}Sn_{y}TiₓL_{w}O₃,
wobei L wenigstens ein Seltenerdmetall bedeutet,
w+x+y zusammen zwischen 0 und 0,2 liegen und
z zwischen 0 und 0,2 liegt,
ausgewählt ist (sind).

3. Röntgenverstärkungsschirm nach Anspruch 2, dadurch gekennzeichnet, daß der (die) Leuchtstoff(e) aus
(a) LnTaO₄,
wobei Ln Yttrium, Lutetium, Gadolinium oder eine Kombination derselben ist,
(b) LnTaO₄:Re,
wobei Ln Lutetium, Gadolinium oder eine Kombination derselben ist und Re Gadolinium, Niobium, Thulium, Cer oder eine Kombination derselben ist,
(c) Ln₂O₃:Re,
wobei Ln Yttrium, Gadolinium oder eine Kombination derselben ist und Re Thulium, Terbium, Gadolinium oder eine Kombination derselben ist,
(d) BaFX:Re,
wobei X Chlorid oder Bromid bedeutet und Re wenigstens ein Seltenerdmetall, vorzugsweise Europium, bedeutet,
(e) BaSrSO₄:Eu und
(f) CAWO₄
ausgewählt ist (sind).

4. Röntgenverstärkungsschirm nach Anspruch 1, dadurch gekennzeichnet, daß der Farbstoff der Formel 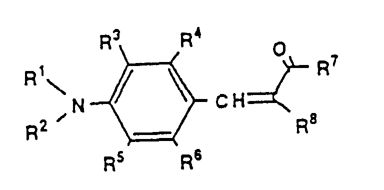 entspricht,
in der bedeuten :
R¹ und R² unabhängig voneinander ein Wasserstoffatom, eine Alkylgruppe mit 1 bis 10 Kohlenstoffatomen oder eine Arylgruppe mit 6 bis 24 Kohlenstoffatomen,
R³, R⁴, R⁵ und R⁶ unabhängig voneinander ein Wasserstoffatom, eine Alkylgruppe mit 1 bis 10 Kohlenstoffatomen, ein Halogenatom, eine Alkoxygruppe oder eine Hydroxylgruppe,
R⁷ eine Alkylgruppe mit 1 bis 10 Kohlenstoffatomen, eine Arylgruppe mit vorzugsweise 6 bis 24 Kohlenstoffatomen, eine -OR⁹-Gruppe oder eine -NR¹⁰R¹¹-Gruppe, wobei R⁹, R¹⁰ und R¹¹ unabhängig voneinander ein Wasserstoffatom, eine Alkylgruppe mit 1 bis 10 Kohlenstoffatomen oder eine Arylgruppe mit 6 bis 24 Kohlenstoffatomen bedeuten,
R⁸ eine Alkylgruppe mit 1 bis 10 Kohlenstoffatomen, eine Arylgruppe mit 6 bis 24 Kohlenstoffatomen, eine -CN-Gruppe, eine -COR¹²-Gruppe, wobei R¹² eine Alkylgruppe mit 1 bis 10 Kohlenstoffatomen oder eine Arylgruppe mit 6 bis 24 Kohlenstoffatomen ist, oder eine -COOR¹³-Gruppe, wobei R¹³ eine Alkylgruppe mit 1 bis 10 Kohlenstoffatomen oder eine Arylgruppe mit 6 bis 24 Kohlenstoffatomen bedeutet, oder in der R⁷ und R⁸ zusammen einen gegebenenfalls substituierten fünf- oder sechsgliedrigen Ring bilden können.

5. Röntgenverstärkungsschirm nach Anspruch 4, dadurch gekennzeichnet, daß der Farbstoff ausgewählt ist aus

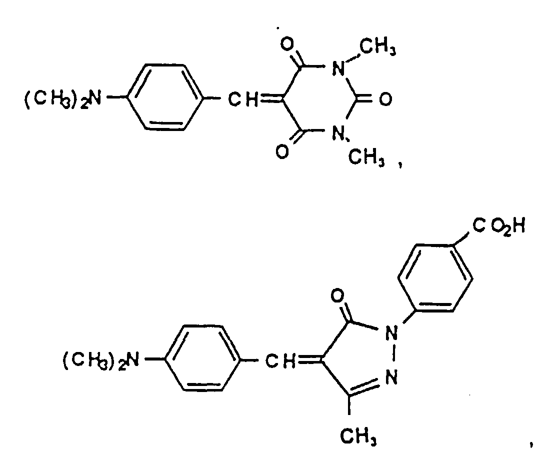

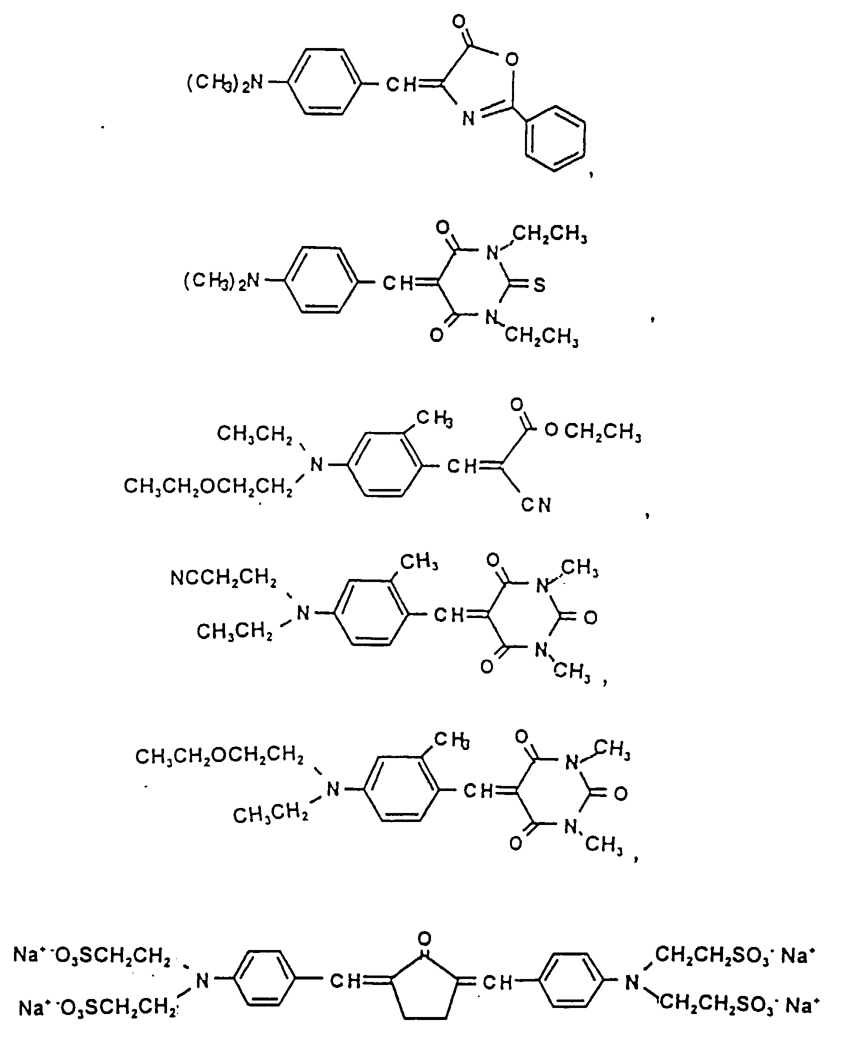

6. Röntgenverstärkungsschirm nach Anspruch 1, dadurch gekennzeichnet, daß die Wellenlänge von wenigstens 80% der Emission des Röntgenverstärkungsschirms unter 400 nm liegt.

7. Röntgenelement, das einen wie in Anspruch 1 definierten Röntgenverstärkungsschirm und ein Filmelement umfaßt, wobei die aktive Schicht des Röntgenverstärkungsschirms dem Filmelement zugewandt ist.

8. Röntgenverstärkungsschirm nach Anspruch 1, der einen Träger mit wenigstens einer darauf vergossenen Schicht enthält,
wobei letztere Schicht(en) wenigstens einen wie in Anspruch 3 definierten, in einem Bindemittel dispergierten Leuchtstoff und
einen wie in Anspruch 1 definierten Farbstoff enthält (enthalten).

9. Röntgenaufzeichnungselement, das wenigstens einen wie in Anspruch 8 definierten Röntgenverstärkungsschirm und ein Filmelement umfaßt, wobei die aktive Schicht des Röntgenverstärkungsschirms dem Filmelement zugewandt ist.

10. Röntgenaufzeichnungselement nach Anspruch 9, das zwei Röntgenverstärkungsschirme umfaßt.

## Revendications

1. Ecran renforçateur des rayons X pour un élément radiographique, comprenant:
un support;
au moins une couche active coulée sur ledit support, dans lequel ladite couche active comprend
un liant et un luminophore; et
au moins une couche comprenant un colorant défini par la formule 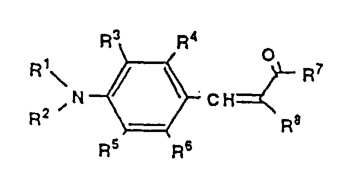
dans laquelle R¹ et R² sont choisis, indépendamment l'un de l'autre, parmi le groupe comprenant un atome d'hydrogène, un groupe alkyle et un groupe aryle;
R³ R⁴, R⁵ et R⁶ sont choisis, indépendamment l'un de l'autre, parmi le groupe comprenant un atome d'hydrogène, un groupe alkyle, un atome d'halogène, un groupe alcoxy, un groupe hydroxyle;
R⁷ représente un groupe alkyle, un groupe aryle, un groupe -OR⁹, un groupe -NR¹⁰R¹¹ dans lequel R⁹, R¹⁰ et R¹¹ représentent, indépendamment l'un de l'autre, un atome d'hydrogène, un groupe alkyle et un groupe aryle;
R⁸ représente un groupe alkyle, un groupe aryle, un groupe -CN, un groupe -COR¹² dans lequel R¹² représente un groupe alkyle ou un groupe aryle, un groupe -COOR¹³ dans lequel R¹³ représente un groupe alkyle ou un groupe aryle;
R⁷ et R⁸ peuvent être pris ensemble pour former un noyau penta- ou hexagonal ou un noyau penta- ou hexagonal substitué;
dans lequel la couche active et la ou lesdites couches comprenant un colorant sont disposées sur le même côté du support, et
dans lequel au moins 70% de l'émission dudit écran renforçateur des rayons X possède une longueur d'onde inférieure à 400 nm.

2. Ecran renforçateur des rayons X selon la revendication 1, dans lequel le ou lesdits luminophores sont choisis parmi le groupe comprenant:
(a) un groupe LnTaO₄ dans lequel
Ln représente l'yttrium, le lutétium, le gadolinium ou leurs combinaisons,
(b) un groupe LnTaO₄:Re dans lequel
Ln représente l'yttrium, le lutétium, le gadolinium ou leurs combinaisons;
Re représente le gadolinium, le niobium, le thulium, le cérium ou leurs combinaisons;
(c) un groupe Ln₂O₃:Re dans lequel
Ln représente l'yttrium, le gadolinium ou leurs combinaisons;
Re représente un métal des terres rares ou des combinaisons de métaux des terres rares;
(d) un groupe BaFX:Re dans lequel
X représente un halogénure ou une combinaison d'halogénures;
Re représente au moins un métal des terres rares;
(e) un groupe ASO₄:Eu dans lequel
A représente le baryum, le strontium ou une de leurs combinaisons;
(f) un groupe CAWO₄;
(g) un groupe BaSi₂O₅:Pb;
(h) un groupe BaSO₄:Pb;
(i) un groupe Mg₄Ta₂₋₂ₓNb₂ₓO₉:M_{y}Na_{y} dans lequel
M représente au moins un membre choisi parmi le groupe comprenant le potassium, le rubidium, le césium;
x représente de 5x10⁻⁴ à 0,5;
y représente au moins 2x10⁻³; et
y+y' est inférieur à 1,0;
(j) le germanate de hafnium-zirconium inactivé ou activé avec du titane;
(k) un groupe Hf_{1-z}Zr_{z}M_{y}TiₓEₑOₐ dans lequel
E représente au moins un membre choisi parmi le groupe comprenant le germanium et le silicium;
e se situe dans le domaine d'une valeur supérieure à 1x10⁻³ à 0,1;
M représente au moins un métal alcalin;
x se situe dans le domaine de 3x10⁻⁴ à 1,0;
y se situe dans le domaine de 1x10⁻⁴ à 1,0;
z se situe dans le domaine de 4x10⁻⁴ à 0,3; et
a représente un nombre suffisant pour équilibrer la charge;
(l) l'oxyde de hafnium-zirconium contenant au moins un métal alcalin et activé avec du titane, au moins un élément des terres rares ou une de leurs combinaisons;
(m) représente un groupe Li₂Hf_{1-x-y-z}Zr_{z}Sn_{y}TiₓL_{w}O₃ dans lequel
L représente au moins un élément des terres rares;
w+x+y représentent de manière collective de 0 à 0,2; et
z représente une valeur s'élevant jusqu'à 0,2.

3. Ecran renforçateur des rayons X selon la revendication 2, dans lequel le ou lesdits luminophores sont choisis parmi le groupe comprenant:
(a) un groupe LnTaO₄ dans lequel
Ln représente l'yttrium, le lutétium, le gadolinium ou leurs combinaisons,
(b) un groupe LnTaO₄:Re dans lequel
Ln représente le lutétium, le gadolinium ou leurs combinaisons;
Re représente le gadolinium, le niobium, le thulium, le cérium ou leurs combinaisons;
(c) un groupe Ln₂O₃:Re dans lequel
Ln représente l'yttrium, le gadolinium ou leurs combinaisons;
Re représente le thulium, le terbium, le gadolinium ou leurs combinaisons;
(d) un groupe BaFX:Re dans lequel
X représente un chlorure ou un bromure;
Re représente au moins un métal des terres rares, de préférence l'europium;
(e) un groupe BaSrSO₄:Eu; et
(f) un groupe CAWO₄.

4. Ecran renforçateur des rayons X selon la revendication 1, dans lequel ledit colorant répond à la formule 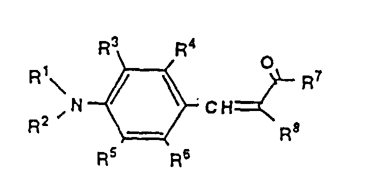
dans laquelle R¹ et R² sont choisis, indépendamment l'un de l'autre, parmi le groupe comprenant un atome d'hydrogène, un groupe alkyle contenant de 1 à 10 atomes de carbone, un groupe aryle contenant de 6 à 24 atomes de carbone;
R³, R⁴, R⁵ et R⁶ sont choisis, indépendamment l'un de l'autre, parmi le groupe comprenant un atome d'hydrogène, un groupe alkyle contenant de 1 à 10 atomes de carbone, un atome d'halogène, un groupe alcoxy, un groupe hydroxyle;
R⁷ représente un groupe alkyle contenant de 1 à 10 atomes de carbone, un groupe aryle contenant de 6 à 24 atomes de carbone, un groupe -OR⁹, un groupe -NR¹⁰R¹¹ dans lequel R⁹, R¹⁰ et R¹¹ représentent, indépendamment l'un de l'autre, un atome d'hydrogène, un groupe alkyle contenant de 1 à 10 atomes de carbone, un groupe aryle contenant de 6 à 24 atomes de carbone;
R⁸ représente un groupe alkyle contenant de 1 à 10 atomes de carbone, un groupe aryle contenant de 6 à 24 atomes de carbone, un groupe -CN, un groupe -COR¹² dans lequel R¹² représente un groupe alkyle contenant de 1 à 10 atomes de carbone ou un groupe aryle contenant de 6 à 24 atomes de carbone, un groupe -COOR¹³ dans lequel R¹³ représente un groupe alkyle contenant de 1 à 10 atomes de carbone ou un groupe aryle contenant de 6 à 24 atomes de carbone;
R⁷ et R⁸ peuvent être pris ensemble pour former un noyau penta- ou hexagonal ou un noyau penta- ou hexagonal substitué.

5. Ecran renforçateur des rayons X selon la revendication 4, dans lequel ledit colorant représente un membre choisi parmi le groupe comprenant:

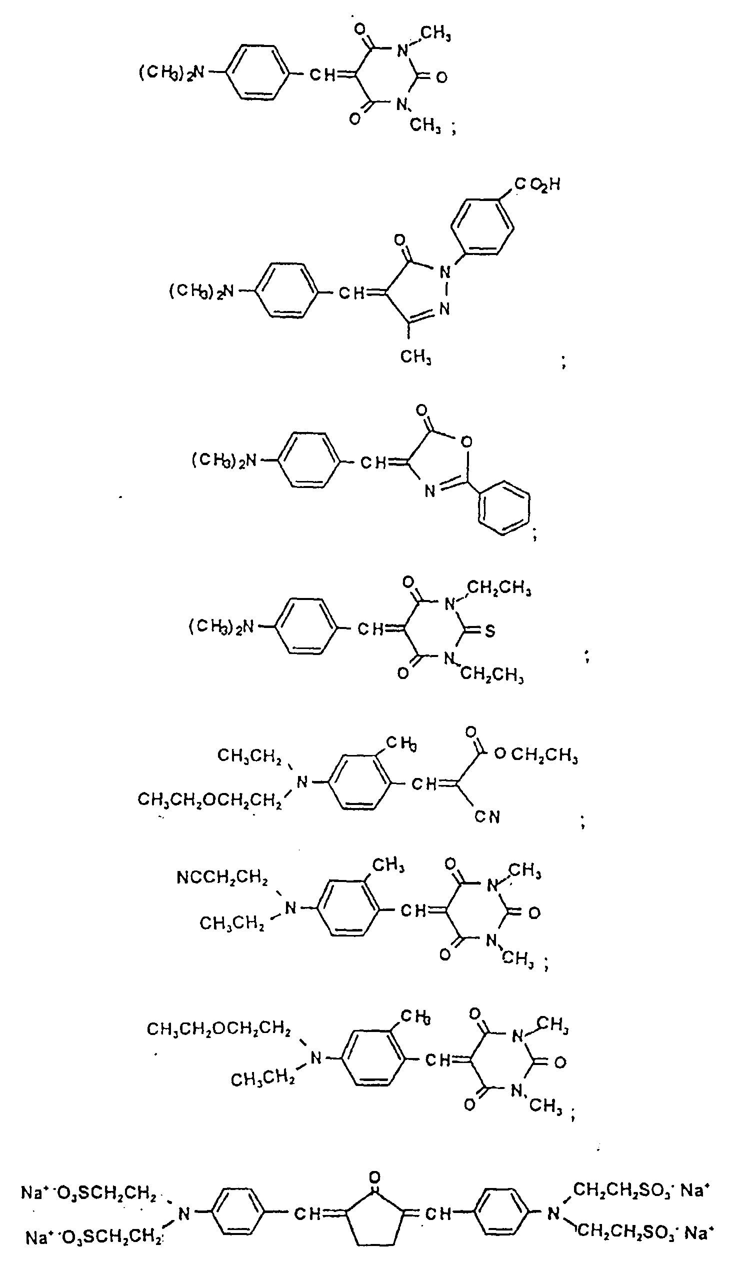

6. Ecran renforçateur des rayons X selon la revendication 1, dans lequel au moins 80% de l'émission dudit écran renforçateur des rayons X possèdent une longueur d'onde inférieure à 400 nm.

7. Elément radiographique comprenant un écran renforçateur des rayons X selon la revendication 1 et un élément en forme de film, dans lequel la couche active de l'écran renforçateur est opposée à l'élément en forme de film.

8. Ecran renforçateur des rayons X selon la revendication 1, comprenant:
un support sur lequel est coulée au moins une couche;
au moins une desdites couches comprend au moins un luminophore dispersé dans un liant,
dans lequel ledit luminophore est tel que défini à la revendication 3; et au moins une desdites couches comprend un colorant tel que défini à la revendication 1.

9. Elément d'enregistrement radiographique comprenant au moins un écran renforçateur des rayons X selon la revendication 8 et un élément en forme de film, dans lequel la couche active de l'écran renforçateur est opposée à l'élément en forme de film.

10. Elément d'enregistrement radiographique selon la revendication 9, comprenant deux desdits écrans renforçateurs des rayons X.
